# EUROPÄISCHE PATENTSCHRIFT

(11) **EP 3 622 674 B1**
(45) Veröffentlichungstag und Bekanntmachung des Hinweises auf die Patenterteilung: **28.06.2023**
(21) Anmeldenummer: 18722975.2
(22) Anmeldetag: 04.05.2018
(51) Int. Cl.: H04L 12/40, H04L 12/46, B60R 16/023

(54) **VERFAHREN ZU ÜBERMITTLUNG MINDESTENS EINES STEUERBEFEHLS UND STEUEREINRICHTUNG**
METHOD FOR TRANSMITTING AT LEAST ONE CONTROL COMMAND AND CONTROL DEVICE
PROCÉDÉ DE TRANSMISSION D'AU MOINS UNE INSTRUCTION DE COMMANDE ET DISPOSITIF DE COMMANDE

(30) Priorität: 08.05.2017 DE 102017109865
(43) Veröffentlichungstag der Anmeldung: 18.03.2020
(73) Patentinhaber: Webasto SE, 82131 Stockdorf (DE)
(72) Erfinder: SONNEK, Sebastian, 82131 Stockdorf (DE); GEISSLER, Markus, 82131 Stockdorf (DE)
(74) Vertreter: Prüfer & Partner mbB Patentanwälte · Rechtsanwälte
(86) Internationale Anmeldenummer: PCT/EP2018/061556
(87) Internationale Veröffentlichungsnummer: WO 2018/206444

(56) Entgegenhaltungen:
- WO-A2-00/18064
- DE-A1- 10 163 393
- DE-A1-102012 214 849

## Beschreibung

Die Erfindung betrifft ein Verfahren zur Übermittlung mindestens eines Steuerbefehls sowie eine Steuereinrichtung.

Aus der DE 10 2014 210 023 B4 ist eine Manipulationseinheit für ein Fahrzeug bekannt. Entsprechende Manipulationseinheiten werden beispielsweise in Fahrzeugen eingesetzt, bei denen nachträglich eine Standheizung eingebaut wird. Ein grundsätzliches Problem bei der Nachrüstung von Standheizungen besteht darin, dass häufig für die Luftzirkulation keine eigenen Aktuatoren, Lüfter und Lüftungsauslässe bzw. Lüftungsklappen eingebaut werden. In einer Ausführungsform wird der nachgerüstete Heizer in den bestehenden Heizkreislauf des Fahrzeugs eingebaut. Um beispielsweise im abgestellten Zustand des Fahrzeugs eine Beheizung des Innenraums zu ermöglichen, ist es notwendig, die Aktuatoren, z.B. Lüftungsklappen und Gebläse, zu aktivieren bzw. in eine Stellung zu bringen, die eine Luftzirkulation ermöglicht.

In modernen Fahrzeugen werden Bussysteme verwendet, um eine Kommunikation beispielsweise zwischen dem Klimabedienteil und den Aktuatoren, z.B. Gebläse und Lüftungsklappen herzustellen. In diesem Zusammenhang schlägt die DE 10 2014 210 023 B4 vor, den Fahrzeugbus zu überwachen, um festzustellen, wann das Fahrzeug ausgeschaltet wird (Zündung = aus). Wenn der Benutzer in diesem Zustand die Aktivierung der Standheizung wünscht, unterbricht die Manipulationseinheit eine bestehende Busverbindung und nutzt diese, um mit den Aktuatoren zu kommunizieren.

Der beschriebene Stand der Technik ist in vielerlei Hinsicht problematisch. So ist die Nutzung der Standheizung eingeschränkt. Weiterhin kann die beschriebene Manipulationseinheit auf eine Zustandsveränderung des Fahrzeugs (Zündung = an) ggf. nicht so schnell reagieren, dass der Bus von der Manipulation nichts mitbekommt. Insofern führt der Einsatz der Manipulationseinrichtung zu Fehlern.

Die DE 101 63 393 A1 beschäftigt sich im weitesten Sinn auch mit der Kommunikation auf Bus-Systemen.

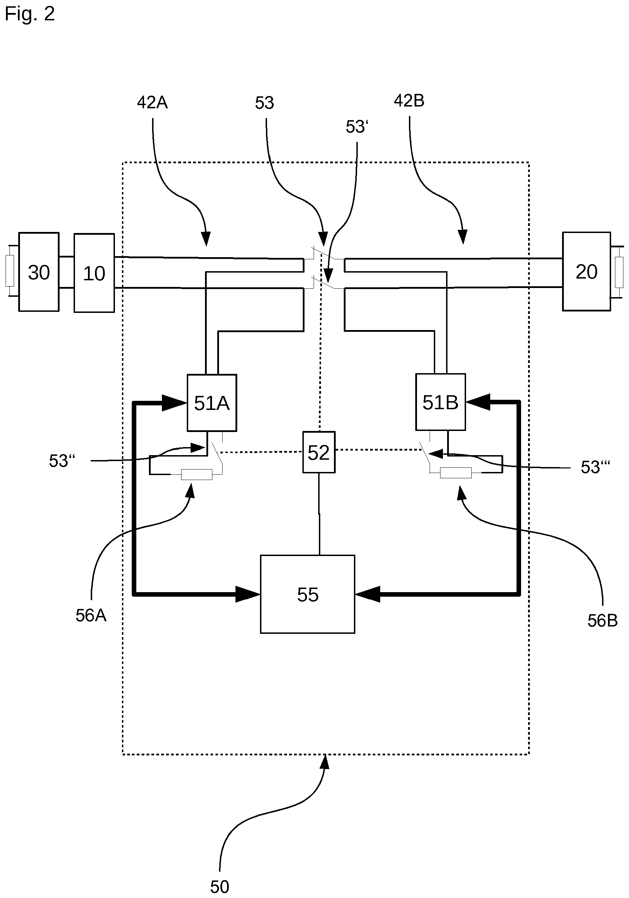

Die DE 10 2012 214849 A1 offenbart ein System und eine Vorrichtung für die Kommunikation zwischen wenigstens zwei Bussen, wobei eine Transferkomponente in einer ersten Betriebsart Signale, die über den ersten Anschluss empfangen werden, an einen zweiten Anschluss ausgibt und in einer zweiten Betriebsart Signale, die über den ersten Anschluss empfangen werden, nicht an einen zweiten Anschluss ausgibt (Fig. 2 und Abs. 0017). Bei einer Ausführungsform, Umschaltschaltung genannt, erfolgt die Umschaltung in die aufgetrennte zweite Betriebsart zur Isolation der Teilbusse durch wenigstens ein erstes von der Transferkomponente empfangenes Steuersignal (Abs.0023) und das Schließen der Umschaltschaltung zur kommunikativen Koppelung durch wenigstens ein zweites von der Transferkomponente empfangenes Steuersignal (Abs. 0024), wobei eine Steuereinheit, welche mit der Transferkomponente gekoppelt ist, die Betriebsart steuert (Abs. 0020).

Bei der DE 10 2012 214849 A1 kann es zu Fehlern in der Kommunikation kommen.

Ausgehend von diesem Stand der Technik ist es Aufgabe der vorliegenden Erfindung, ein verbessertes Verfahren zur Übermittlung mindestens eines Steuerbefehls an mindestens einen Aktuator anzugeben. Weiterhin soll eine entsprechend verbesserte Steuereinheit angegeben werden.

Insbesondere soll das Auftreten von negativen Einflüssen, beispielsweise Kommunikationsfehlern, vermieden werden.

Die Aufgabe wird durch ein Verfahren gemäß dem Anspruch 1 gelöst.

Ein Kern der vorliegenden Erfindung besteht darin, dass der zu unterbrechende Kommunikationsbus, z.B. ein CAN-Bus oder ein LIN-Bus, überwacht wird. Je nach Ausgestaltung der Erfindung, kann durch die Überwachung ein bestimmtes Ereignis, beispielsweise das Ausbleiben einer Kommunikation auf dem Bus (= Busruhe), erkannt werden. Basierend auf dem Erkennen dieses Ereignisses kann der Kommunikationsbus aufgetrennt bzw. unterbrochen werden. Ein entsprechendes Auftrennen kann beispielsweise durch die Verwendung eines Relais erfolgen. Erfindungsgemäß werden bei einem Aufbrechen bzw. Auftrennen elektrische Verbindungen zwischen einzelnen Leitungen des Busses unterbrochen. Nach dem Auftrennen des Busses kann ein Aktuator mittels eines Steuerbefehles angesprochen werden, ohne dass Komponenten an dem ersten Bussegment hiervon Kenntnis erlangen.

Durch den beschriebenen Ansatz können negative Einflüsse auf den Kommunikationsbus und/oder daran angeschlossene Komponeten vermieden werden. Weiterhin sind zahlreiche Anwendungen denkbar, bei denen wesentlich flexible in die Steueralgorithmik eingegriffen werden kann. Beispielsweise ist es denkbar, nur in sehr kurzen Zeitintervallen in die Kommunikation auf dem Kommunikationsbus einzugreifen. Alternativ ist es ebenso möglich, nur dann in die Kommunikation einzugreifen, wenn dies zwingend notwendig ist (Lüfter läuft nicht oder Klappen befinden sich in einer ungünstigen Stellung).

Durch ein vorzugsweise dauerhaftes Überwachen des Kommunikationsbusses bzw. den Kommunikationsleitungen kann ein optimaler Zeitpunkt zum Umschalten abgewartet werden.

Erfindungsgemäß wird nach dem Auftrennen des Kommunikationsbusses in einer Weiterleitungs-Phase ein Steuerbefehl auf dem ersten Bussegment empfangen und auf dem zweiten Bussegment ausgegeben. In dieser Phase verhält sich eine entsprechende Steuereinheit wie ein Repeater und wiederholt die empfangenen Steuerbefehle einfach auf dem jeweils anderen Segment. Erfindungsgemäß ist es möglich, dass diese Repeater-Funktion auch in die umgekehrte Richtung, von dem zweiten Bussegment hin zum ersten Bussegment - umgesetzt wird. Die Unterbrechung des Kommunikationsbusses bzw. die Aufteilung in zwei Bussegmente wird also von den Teilnehmern am Bus nicht wahrgenommen. Dies hat den Vorteil, dass ggf. sehr selektiv in die Steueralgorithmik der Aktuatoren eingegriffen werden kann.

Erfindungsgemäß wird nach dem Auftrennen des Kommunikationsbusses in einer Absorbierungs-Phase mindestens ein Steuerbefehl, der an den Aktuator gerichtet ist, auf dem ersten Bussegment empfangen und bestätigt, wobei aber keine Ausgabe bzw. Wiederholung des Steuerbefehls auf dem zweiten Bussegment erfolgt. Das erfindungsgemäße Verfahren kann also selektiv oder durchgehend in einer zweiten Phase Steuerbefehle absorbieren und nicht weitergeben. Insofern ist es möglich, für die umzusetzende Funktion, beispielsweise Beheizung des Innenraums mittels eines Zuheizers, schädliche Steuerbefehle zu absorbieren bzw. abzufangen. Ein entsprechender schädlicher Befehl kann beispielsweise das Deaktivieren der Lüftung bzw. des Lüfters oder das Schließen der Lüftungsklappe sein.

In einer, der Ausführungsform wird in der Absorbierungs-Phase der Empfang des Steuerbefehls auf dem ersten Bussegment bestätigt, obwohl eine Weitergabe an den Aktuator nicht erfolgt ist.

In einer Ausführungsform erfolgt nach dem Auftrennen und Übermitteln des mindestens einen Steuerbefehls wieder ein Verbinden des ersten und zweiten Bussegments. Das Übermitteln des mindestens einen Steuerbefehls kann in der Zwischenzeit mehrfach oder nur einmal erfolgen. Theoretisch ist es auch denkbar, das Auftrennen und Wiederverbinden des Kommunikationsbusses innerhalb einer Heizphase mehrfach durchzuführen. Bevorzugt wird der Kommunikationsbus über eine längere Phase unterbrochen, beispielsweise vom Aktivieren der Heizung im abgestellten Zustand des Fahrzeugs bis hin zum Betätigen der Zündung, soweit zu diesem Zeitpunkt noch geheizt werden soll.

In einer Ausführungsform erfolgt das Verbinden des ersten und zweiten Bussegments zu einem Zeitpunkt, der zumindest teilweise von einem Ereignis auf dem ersten Bussegment abhängt. Erfindungsgemäß können also auch beim Verbinden der beiden Bussegmente Erkenntnisse genutzt werden, die aufgrund des Überwachens des Kommunikationsbusses gewonnen wurden. In einer Ausführungsform kann das Ereignis eine Busruhe sein, die über ein vorgegebenes Zeitintervall hinaus andauert. In einer (anderen) Ausführungsform kann das Ereignis die Aktivierung des Klimabedienteils sein.

In einer Ausführungsform geht dem Verbinden der Bussegmente eine Weiterleitungs-Phase vorher. Eine entsprechende Weiterleitungs-Phase kann derart ausgestaltet sein, wie diese bereits vorab beschrieben wurde. Erfindungsgemäß kann diese Weiterleitungsphase dem Verbinden unmittelbar oder mittelbar vorhergehen.

Die eingangs genannte Aufgabe wird weiterhin durch ein computerlesbares Speichermedium bzw. einen computerlesbaren Speicher gelöst, wobei der Speicher Instruktionen zur Ausführung auf einer Recheneinheit umfasst. Die Instruktionen sind vorzugsweise derart erfindungsgemäß individualisiert, dass diese bei einer Ausführung zumindest eines der vorbeschriebenen Verfahren umsetzt. Es ergeben sich ähnliche Vorteile, wie diese bereits in Verbindung mit den beschriebenen Verfahren erläutert wurden.

Weiterhin wird die eingangs genannte Aufgabe durch eine Steuereinheit gelöst, die ein entsprechendes computerlesbares Medium bzw. einen entsprechenden computerlesbaren Speicher sowie eine Recheneinheit umfasst. In einer Ausführungsform handelt es sich bei der Steuereinheit um eine Manipulationseinheit.

In einer Ausführungsform wird die eingangs genannte Aufgabe durch eine Steuereinheit nach Anspruch 6 gelöst.

Die Recheneinheit kann ein Microcontroller oder eine dezidierte Hardware sein. Auch hier ergeben sich ähnliche Vorteile, wie diese bereits beschrieben wurden.

Insbesondere kann aufgrund der vorhandenen Transceiver die Aktivität auf dem Kommunikationsbus bzw. auf dem ersten und/oder zweiten Bussegment fortlaufend oder temporär überwacht werden, so dass die Schalteinrichtung gezielt in Reaktion auf bestimmte Aktivitäten bzw. Ereignisse auf dem Kommunikationsbus schalten kann.

Bei der Schalteinrichtung kann es sich um ein einfaches Relais handeln. Alternativ kann eine Umsetzung mittels Transistoren erfolgen. Erfindungsgemäß sind zahlreiche Umsetzungsmöglichkeiten denkbar, die den Gedanken des zumindest teilweise physikalischen Auftrennens des Kommunikationsbusses umsetzen.

In einer Ausführungsform ist die Schalteinrichtung dazu ausgebildet, in einem stromlosen Zustand die elektrische Verbindung zwischen dem ersten Bussegment und dem zweiten Bussegment herzustellen. Diese Ausgestaltung hat den Vorteil, dass in einem Fehlerfall, beispielsweise der Schalteinrichtung oder der Steuereinheit, eine sichere Kommunikation auf dem Kommunikationsbus möglich ist. Weiterhin wird unabhängig von dem Zustand der Steuereinheit die Grundfunktionalität des Fahrzeugs, beispielsweise Kommunikation zwischen Klimabedienteil und Aktuatoren, nicht beeinflusst.

Erfindungsgemäß ist die Recheneinheit dazu ausgebildet, in einer Weiterleitungs-Phase Signale, insbesondere Steuerbefehle, mittels des ersten Transceivers zu empfangen und korrespondierende Signale, insbesondere korrespondierende Steuerbefehle, mittels des zweiten Transceivers auszugeben. Die Recheneinheit nutzt also die beiden Transceiver, um eine Repeater-Funktion, wie diese bereits beschrieben wurde, zu implementieren.

Die Steuereinheit kann mindestens ein erstes Terminierungsmittel, insbesondere einen ersten Endwiderstand umfassen. Es ist möglich, dieses Terminierungsmittel beim Auftrennen des Kommunikationsbusses derart auf das erste und/oder zweite Bussegment aufzuschalten, dass die notwendige Terminierung der einzelnen Bussegmente effizient umgesetzt wird. In einer Ausführungsform umfasst die Steuereinheit ein erstes Terminierungsmittel sowie ein zweites Terminierungsmittel, um das erste Bussegment bzw. das zweite Bussegment zu terminieren.

In einer Ausführungsform sind Schalter z.B. Öffner oder Schließer, vorgesehen, die seitens der Steuereinheit, insbesondere seitens der Recheneinheit betätigt werden. Diese Schalter können dazu eingesetzt werden, um die Terminierungsmittel auf das jeweilige Bussegment aufzuschalten. Insofern ist es möglich, zu jedem Zeitpunkt - unabhängig von dem Schaltzustand der Schalteinrichtung - einen technisch intakten Kommunikationsbus bzw. technisch intakte Bussegmente bereitzustellen. Es treten keine Kommunikationsfehler auf. Ebenso können keine Fehler bei einer möglichen Überprüfung des Busses detektiert werden.

Die eingangs genannte Aufgabe wird weiterhin durch ein System gelöst, das eine Heizeinrichtung sowie eine Steuereinheit, wie diese vorab beschrieben wurde, umfasst. In einer Ausführungsform ist die Steuereinheit kommunikativ, insbesondere über einen (weiteren) Bus, mit der Heizeinrichtung verbunden.

In einer Ausführungsform wird der Zustand der Heizeinrichtung unterbrochen.

Insbesondere kann die kommunikative Verbindung zur Heizeinrichtung genutzt werden, um eine Heizphase der Heizeinrichtung zu erkennen bzw. die Heizeinrichtung in eine Heizphase zu bringen, wobei eine Unterbrechung des Busses in Abhängigkeit vom Zustand der Heizeinrichtung erfolgt.

Die eingangs genannte Aufgabe kann ebenfalls durch ein Fahrzeug, umfassend das vorbeschriebene System, gelöst werden.

Weitere vorteilhafte Ausgestaltungen ergeben sich anhand der Unteransprüche.

Nachfolgend wird die Erfindung anhand von mehreren Ausführungsbeispielen beschrieben, die mittels Abbildungen näher erläutert werden. Hierbei zeigen:
- Fig. 1: eine schematische Ansicht eines Fahrzeugs mit einem Fahrzeugbus, wobei an den Fahrzeugbus einige Komponenten, umfassend eine Manipulationseinheit angeschlossen sind;
- Fig. 2: die Manipulationseinheit aus Fig. 1 in einer Detailansicht;
- Fig. 3: eine schematische Ansicht eines Fahrzeugs mit einem Fahrzeugbus sowie mit einem LIN-Bus, wobei die Manipulationseinheit Teil des LIN-Busses ist.

In der nachfolgenden Beschreibung werden für gleiche und gleichwirkende Teile dieselben Bezugsziffern verwendet.

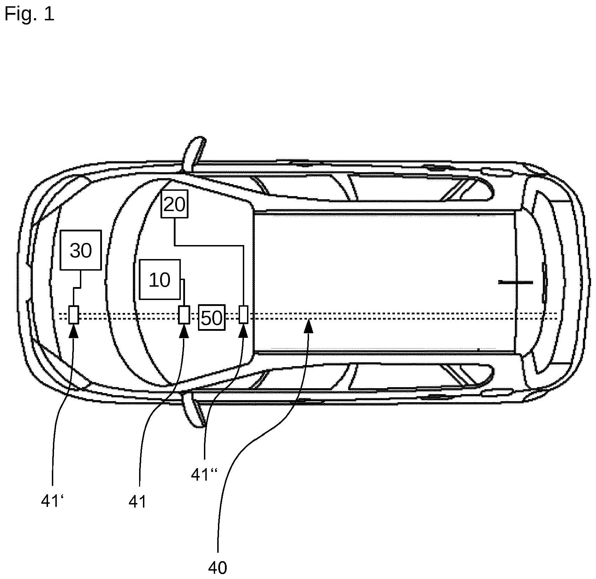

Die Fig. 1 zeigt eine schematische Draufsicht auf ein Fahrzeug mit den für das Verständnis der Erfindung wesentlichen Komponenten. So enthält das Fahrzeug einen Fahrzeugbus 40, bei dem es sich beispielsweise um einen LIN-Bus oder einen CAN-Bus handeln kann. An den Fahrzeugbus 40 sind über Anschlüsse 41, 41', 41" drei Busteilnehmer angeschlossen. So ist ein Klimabedienteil 10 über den ersten Anschluss 41, ein Zuheizer 30 über einen zweiten Anschluss 41' und eine Lüftungseinrichtung 20, z.B. mit Aktuatoren in Form eines Lüfters und/oder einer Klappeneinstelleinrichtung, über den dritten Anschluss 41 an den Fahrzeugbus 40 angeschlossen.

Erfindungsgemäß können weitere Teilnehmer an den Fahrzeugbus 40 angeschlossen sein. Des Weiteren ist es üblich bei Fahrzeugen, dass neben dem zentralen Fahrzeugbus 40 andere Busse existieren, die dezidierte Aufgaben wahrnehmen. Für dieses Ausführungsbeispiel wird der Einfachheit halber unterstellt, dass lediglich ein Bus zur Kommunikation der einzelnen Komponenten notwendig ist.

In dem Fahrzeugbus 40 ist eine Manipulationseinrichtung 50 eingebaut.

Fig. 2 zeigt die Manipulationseinrichtung 50 im Detail. Letztendlich unterbricht die Manipulationseinrichtung 50 den Fahrzeugbus 40 und teilt diesen in zwei Teilsegmente, nämlich das erste Bussegment 42A mit dem Klimabedienteil 10 und dem Zuheizer 30, und das zweite Bussegment 42B mit der Lüftungseinrichtung 20 auf. Der Fahrzeugbus 40 ist links- und rechtsseitig (vgl. Figur 2) durch einen schematisch dargestellten Endwiderstand abgeschlossen.

Die Manipulationseinrichtung 50 umfasst eine Recheneinheit 55 bzw. einen Mikrocontroller, einen ersten Transceiver 51A, einen zweiten Transceiver 51B sowie ein Relais. Das Relais lässt sich seinerseits in eine Relaisbetätigungseinrichtung 52 sowie in zwei Öffner 53, 53' und zwei Schließer 53" und 53‴ unterteilen.

In der beschriebenen Ausführungsform sind die Transceiver 51A und 51B dauerhaft an den Fahrzeugbus 40 angeschlossen, wobei der erste Transceiver 51A Teilnehmer des ersten Bussegments 42A, und der zweite Transceiver 51B Teilnehmer des zweiten Bussegments 42B ist.

Insofern ist es der Recheneinheit 55 mittels des ersten und/oder zweiten Transceivers 51A, 51B möglich, die Kommunikation auf dem Fahrzeugbus 40 allgemein und nach einer Auftrennung des Fahrzeugbusses 40 auf den Bussegmenten 42A, 42B zu empfangen. Die Öffner 53, 53' sind so in dem Fahrzeugbus 40 angeordnet, dass sie bei einer Aktivierung der Relais-Betätigungseinrichtung 52 den Fahrzeugbus 40 elektrisch unterbrechen und so in das erste und zweite Bussegment 42A, 42B unterteilen. Gleichzeitig betätigt die Relais-Betätigungseinrichtung 52 die Schließer 53", 53‴, so dass die Bussegmente 42A, 42B mittels eines Endwiderstands 56A bzw. 56B terminiert werden.

Der Recheneinheit 55 ist es also möglich, mittels des Relais, insbesondere mittels der Relais-Betätigungseinrichtung 52 den Fahrzeugbus 40 aufzutrennen und ordentlich zu terminieren. In anderen Worten kann die Recheneinheit 55 zwischen einem ersten Zustand (Bus nicht unterbrochen) und einem zweiten Zustand (Bus unterbrochen) hin und her schalten. In dem zweiten Zustand hat das erste Bussegment 42A den Zuheizer 30, das Klimabedienteil 10 und den ersten Transceiver 51A als Teilnehmer. Dementsprechend hat das zweite Bussegment 42B den zweiten Transceiver 51B sowie die Lüftungseinrichtung 20 als Teilnehmer.

Wie bereits in der Einleitung beschrieben, ist es beispielsweise für das effektive Betreiben einer Standheizung notwendig, dass die Kontrolle über bestimmte Aktuatoren, beispielsweise die Lüftungseinrichtung 20, übernommen werden kann. In dem beschriebenen Ausführungsbeispiel ist es notwendig, einen entsprechenden Steuerbefehl an die Lüftungseinrichtung 20 zu senden, der nicht von dem Klimabedienteil 10 stammt, das im "Normalbetrieb" die Lüftungseinrichtung 20 steuert.

Das erfindungsgemäße Verfahren zur Übernahme der Kontrolle kann beispielsweise die folgenden Schritte umfassen:
1. Überwachung des Fahrzeugbusses 40;
2. Erkennen einer Busruhe auf dem Fahrzeugbus 40;
3. Auftrennen des Fahrzeugbusses 40 mittels des Relais;
4. Übermitteln des besagten Steuerbefehls an die Lüftungseinrichtung 20.

Geht man also davon aus, dass sich das Fahrzeug bzw. die Manipulationseinrichtung 50 im ersten Zustand (Bus nicht unterbrochen) befindet, so kann erfindungsgemäß der Fahrzeugbus 40 mittels des ersten Transceivers 51A überwacht werden. Wenn es notwendig ist, die Kontrolle über die Lüftungseinrichtung 20 zu übernehmen, versucht die Recheneinheit 55 einen Zeitpunkt zu erkennen, zu dem Busruhe herrscht. Zu diesem Zeitpunkt wird die Relais-Betätigungseinrichtung 52 aktiviert, so dass eine physische Auftrennung des Fahrzeugbusses 40 in die beiden Bussegmente 42A, 42B erfolgt. In diesem Zustand ist es der Recheneinheit 55 möglich, Steuerbefehle an die Lüftungseinrichtung 20 zu senden, ohne dass dies die Teilnehmer des ersten Bussegments 42A mitbekommen. Weiterhin ermöglicht es die bereits beschriebene Terminierung der Bussegmente 42A, 42B, dass die Bussegmente 42A, 42B stets in einem funktionstüchtigen Zustand sind.

In einem Ausführungsbeispiel ist es möglich, dass die erfindungsgemäße Manipulationseinrichtung 50 Steuerbefehle, die im zweiten Zustand mittels des ersten Transceivers 51A empfangen werden, absorbiert und nicht an die Lüftungseinrichtung 20 weitergibt. Ebenso kann in diesem Zustand eine Quittierung des Steuerbefehls auf dem ersten Bussegment 42A erfolgen, obwohl der Steuerbefehl tatsächlich nicht ausgeführt wurde.

Weiterhin ist es möglich, Steuerbefehle in dem zweiten Zustand über den ersten Transceiver 51A zu empfangen, durch die Recheneinheit 55 zu überprüfen und ggf. über den zweiten Transceiver 51B auszugeben. Die Manipulationseinrichtung 50 hat in diesem Fall die Funktion eines Repeaters.

Diese Funktionalität kann besonders sinnvoll sein, wenn der Fahrzeugbus 40 bereits unterbrochen wurde, das Ausgeben von eigenen Steuerbefehlen, die von der Recheneinheit 55 stammen, jedoch nicht notwendig sind. Ebenso kann diese Funktion hilfreich sein, wenn beispielsweise das Heizen mittels des Zuheizers 30 nicht mehr gewünscht wird, jedoch eine erneute Verbindung der beiden Bussegmente 42A, 42B noch nicht erfolgt ist. Beispielsweise kann das Klimabedienteil 10 aufgrund des Anlassens des Fahrzeugs aktiviert worden sein und seinerseits versuchen, Steuerbefehle an die Lüftungseinrichtung 20 zu senden. In diesem Zustand wird in einem Ausführungsbeispiel der Erfindung ein Heizen seitens des Zuheizers 30 unterbrochen. Die Steuerbefehle des Klimabedienteils 10 können "ungefiltert" an die Lüftungseinrichtung 20 weitergegeben werden.

In einem anderen Ausführungsbeispiel wird die Manipulationseinrichtung 50 versuchen, in dieser Situation (Klimabedienteil 10 befindet sich in einem aktiven Zustand) den Fahrzeugbus 40 wieder zu verbinden. Erfindungsgemäß kann diesem Verbinden eine Überwachungsphase vorhergehen, bei der die Recheneinheit 55 auf ein bestimmtes Ereignis, beispielsweise Busruhe, wartet. In diesem Ausführungsbeispiel kann der Transceiver 51A genutzt werden, um das Ereignis zu erkennen. Die Recheneinheit 55 deaktiviert dann in Abhängigkeit von diesem Ereignis die Relais-Betätigungseinrichtung 52, so dass der Fahrzeugbus 40 wieder geschlossen wird. Vorzugsweise erfolgt gleichzeitig eine Abtrennung der Endwiderstände 56A und 56B.

In einem Ausführungsbeispiel ist die Recheneinheit 55 dazu ausgebildet, nach der Aktivierung des Klimabedienteils 10 die Art und Auswirkung der von diesem ausgesandten Steuerbefehle zu erkennen bzw. zu interpretieren. Beispielsweise kann das Klimabedienteil 10 Steuerbefehle aussenden, die die Lüftungseinrichtung 20 dazu veranlassen, bei 40 %iger Leistung zu arbeiten. Tatsächlich kann die Recheneinheit 55 jedoch die Lüftungseinrichtung 20 bereits zu einem früheren Zeitpunkt dazu veranlasst haben, bei 60 %iger Leistung zu arbeiten. In diesem Zustand kann die Recheneinheit 55 den Steuerbefehl des Klimabedienteils 10 derart abändern, dass anstelle von einer 40 %igen Steigerung der Leistung eine 20 %ige Erniedrigung der Leistung seitens der Lüftungseinrichtung 20 erreicht wird.

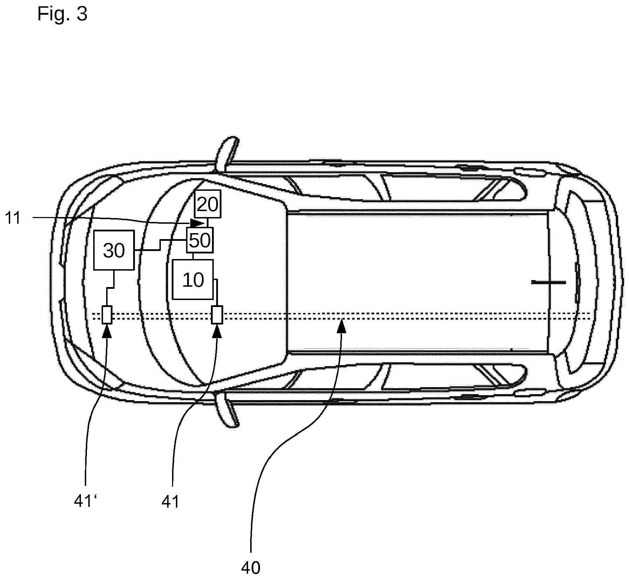

In den beschriebenen Ausführungsbeispielen wurde von einem einzigen Fahrzeugbus 40 ausgegangen. Tatsächlich ist es häufig so, dass das Klimabedienteil 10 an dem Fahrzeugbus 40 hängt, wobei das Klimabedienteil 10 und die Lüftungseinrichtung 20 ggf. mit weiteren Aktuatoren ein eigenes Bussystem aufspannen. Erfindungsgemäß kann die beschriebene Manipulationseinrichtung 50 genutzt werden, um dieses eigene Bussystem aufzutrennen, und dort, wie bereits aufgezeigt, die Kontrolle zu übernehmen. Fig. 3 zeigt ein entsprechendes Ausführungsbeispiel, wobei das eigene Bussystem ein LIN-Bus 11 ist.

In einem Ausführungsbeispiel ist es notwendig, dass der Zuheizer 30 mit der Manipulationseinrichtung 50 kommuniziert. In den Ausführungsbeispielen, wie sie anhand der Fig. 1 und 2 erläutert wurden, erfolgt eine entsprechende Kommunikation mittels des Fahrzeugbusses 40 bzw. des ersten Bussegmentes 42A. In einem anderen Ausführungsbeispiel kann eine entsprechende Kommunikation über ein getrenntes Bussystem (vgl. Verbindung zwischen dem Zuheizer 30 und der Manipulationseinrichtung 50 in Fig. 3) erfolgen.

In einem (weiteren) Ausführungsbeispiel verfügt der Zuheizer 30 über keine eigene Recheneinheit 55, und wird beispielsweise mittels eines Relais von der Manipulationseinrichtung 50 aktiviert.

Erfindungsgemäß kann die Manipulationseinrichtung 50 mit beliebigen Ein- und Ausgängen ausgestattet sein, um beispielsweise mit einem Benutzer in Interaktion zu treten. So kann die Recheneinheit 55 Benutzereingaben von dem Benutzer empfangen, die beispielsweise besagen, dass ein Heizen mittels des Zuheizers 30 erwünscht ist. Die Recheneinheit 55 kann mit diesem Ausführungsbeispiel alle Funktionen übernehmen, um ein entsprechendes Heizen 30 umzusetzen.

In einem Ausführungsbeispiel ist der beschriebene Zuheizer 30 ein selbstständiges Heizgerät. In Abwandlungen der Erfindung kann der Zuheizer 30 auch ein Kühlgerät sein oder ein kombiniertes Gerät zum Kühlen und Heizen.

In den beschriebenen Ausführungsbeispielen wurden zwei Transceiver 51A, 51B verwendet, um die Erfindung umzusetzen. Erfindungsgemäß kann auch auf den ersten Transceiver 51A verzichtet werden, soweit nur beim Unterbrechen des Fahrzeugbusses 40 eine Überwachung des Fahrzeugbusses 40 erfolgen soll.

In den beschriebenen Ausführungsbeispielen wurden Endwiderstand 56A, 56B gleichzeitig mit dem Aufbrechen des Fahrzeugbusses 40 in diesen eingekuppelt. In einem Ausführungsbeispiel der Erfindung ist ein einkuppeln entsprechender Endwiderstände nicht notwendig, da der Bus keine Endwiderstände zur Terminierung benötigt oder diese als Teil einer auf dem Bus kommunizierenden Komponente vorgesehen sind. In einem Ausführungsbeispiel umfassen beispielsweise die Transceiver 51A, 51B entsprechende Endwiderstände 56A bzw. 56B.

An dieser Stelle sei darauf hingewiesen, dass alle oben beschriebenen Teile für sich allein gesehen und in jeder Kombination, insbesondere die in den Zeichnungen dargestellten Details, als erfindungswesentlich beansprucht werden. Abänderungen hiervon sind dem Fachmann geläufig. Insbesondere ist es dem Fachmann geläufig, die einzelnen Ausführungsbeispiele in beliebiger Form zu kombinieren.

### Bezuaszeichenliste

- 10: Klimabedienteil (HVAC)
- 11: LIN-Bus
- 20: Lüftungseinrichtung
- 30: Zuheizer
- 40: Fahrzeugbus
- 41, 41', 41": Anschluss
- 42A, 42B: Bussegment
- 50: Manipulationseinrichtung
- 51A, 51B: Transceiver
- 52: Relais-Betätigungseinrichtung
- 53, 53', 53", 53‴: Öffner bzw. Schließer
- 55: Recheneinheit bzw. Mikrocontroller
- 56A, 56B: Endwiderstand bzw. Abschlusswiderstand

## Patentansprüche

1. Verfahren zur Übermittlung von Steuerbefehlen an mindestens einen Aktuator (20) in einem Fahrzeug, umfassend die folgenden Schritte:
a) Überwachen eines Kommunikationsbusses (40);
b) Erkennen eines Ereignisses;
c) Auftrennen der elektrischen Verbindung des Kommunikationsbusses in ein erstes Bussegment (42A) basierend auf dem Erkennen des Ereignisses und ein zweites Bussegment (42B), wobei der Aktuator (20) Teil des zweiten Bussegments (42B) ist;
d) Übermitteln der Steuerbefehle an den mindestens einen Aktuator (20) auf dem zweiten Bussegment (42B),
wobei nach dem Auftrennen der elektrischen Verbindung des Kommunikationsbusses (40),
in einer Weiterleitungs-Phase das Übermitteln derart erfolgt, dass die Steuerbefehle auf dem ersten Bussegment (42A) empfangen und auf dem zweiten Bussegment (42B) ausgegeben werden; und/oder in einer Absorbierungs-Phase mindestens ein Steuerbefehl, der an den Aktuator (20) gerichtet ist, auf dem ersten Bussegment (42A) empfangen und bestätigt wird, aber nicht auf dem zweiten Bussegment (42B) ausgegeben wird.

2. Verfahren nach Anspruch 1,
**wobei** einem Verbinden des ersten und zweiten Bussegmentes (42A, 42B) ein Überwachen des Kommunikationsbusses (40) zum Erkennen eines Ereignisses vorhergeht, wobei ein Zeitpunkt zum Verbinden basierend auf dem Erkennen des Ereignisses ermittelt wird.

3. Verfahren nach einem der vorhergehenden Ansprüche
**wobei**
dem Verbinden eine Weiterleitungs-Phase vorzugsweise unmittelbar vorhergeht, wobei in der Weiterleitungs-Phase Steuerbefehle auf dem ersten Bussegment (42A) empfangen und auf dem zweiten Bussegment (42B) ausgegeben werden.

4. Computerlesbarer Speicher mit Instruktionen zur Ausführung auf mindestens einer Steuereinheit (50) nach einem der Ansprüche 6 bis 11, wobei die Instruktionen das Verfahren gemäß einem der vorhergehenden Ansprüche implementieren, wenn diese auf der mindestens einen Recheneinheit ausgeführt werden.

5. Steuereinheit, mit mindestens einem computerlesbaren Speicher und mindestens einer Recheneinheit, wobei Instruktionen auf dem computerlesbaren Speicher das Verfahren gemäß einem der Ansprüche 1 bis 3 implementieren, wenn diese auf der mindestens einen Recheneinheit ausgeführt werden.

6. Steuereinheit, umfassend:
- einen ersten Transceiver (51A) zur Verbindung mit einem ersten Bussegment (42A) eines Fahrzeugs;
- einen zweiten Transceiver (51B) zur Verbindung mit einem zweiten Bussegment (42B) des Fahrzeugs, wobei ein Aktuator (20) Teil des zweiten Bussegments (42B) ist;
- eine Recheneinheit (55), die kommunikativ mit dem ersten und dem zweiten Transceiver (51B) verbunden ist,
wobei
die Recheneinheit (55) dazu ausgebildet ist, eine Kommunikation auf dem ersten und/oder zweiten Bussegment (42A, 42B) zu überwachen und basierend auf der Überwachung eine Schalteinrichtung, zu aktivieren, wobei die Schalteinrichtung dazu ausgebildet ist, eine elektrische Verbindung zwischen dem ersten Bussegment (42A) und dem zweiten Bussegment (42B) herzustellen oder die elektrische Verbindung zu unterbrechen,
wobei
die Recheneinheit (55) dazu ausgebildet ist, nach einer Unterbrechung der elektrischen Verbindung mindestens einen Steuerbefehl in einer Weiterleitungs-Phase Signale mittels des ersten Transceivers (51A) zu empfangen und korrespondierende Signale mittels des zweiten Transceivers (51B) auszugeben und/oder
in einer Absorbierungs-Phase den mindestens ein Steuerbefehl, der an den Aktuator (20) gerichtet ist, mittels des ersten Transceivers (51A) zu empfangen, zu bestätigen und nicht mittels des zweiten Transceivers (51B) auszugeben.

7. Steuereinheit nach Anspruch 6,
**wobei**
die Schalteinrichtung dazu ausgebildet ist, in einem stromlosen Zustand die elektrische Verbindung zwischen dem ersten Bussegment (42A) und dem zweiten Bussegment (42B) herzustellen.

8. Steuereinheit nach Anspruch 6 oder 7,
**wobei**
die Recheneinheit (55) dazu ausgebildet ist, in der Weiterleitungs-Phase Steuerbefehle mittels des ersten Transceivers (51A) zu empfangen und korrespondierende Steuerbefehle mittels des zweiten Transceivers (51B) auszugeben.

9. Steuereinheit nach einem der Ansprüche 6 bis 8,
**wobei**
die Steuereinheit mindestens ein erstes Terminierungsmittel, nämlich einen ersten Endwiderstand (56A), umfasst, wobei die Steuereinheit dazu ausgebildet ist, zeitgleich mit der Unterbrechung der elektrischen Verbindung das erste Bussegment (42A) mittels des ersten Terminierungsmittels (56A) zu terminieren.

10. Steuereinheit nach einem der Ansprüche 6 bis 9,
wobei
die Steuereinheit mindestens ein zweites Terminierungsmittel, nämlich einen zweiten Endwiderstand (56B), umfasst, wobei die Steuereinheit dazu ausgebildet ist, zeitgleich mit der Unterbrechung der elektrischen Verbindung das zweite Bussegment (42B) mittels des zweiten Terminierungsmittels (56B) zu terminieren.

11. Steuereinheit nach einem der Ansprüche 6 bis 10, umfassend einen ersten Schalter zur Terminierung des ersten Bussegments (42A) und/oder
einen zweiten Schalter zur Terminierung des zweiten Bussegments (42A), wobei die Recheneinheit den ersten bzw. zweiten Schalter betätigt, um im Fall der Unterbrechung der elektrischen Verbindung das erste bzw. zweite Bussegment zu terminieren.

12. System, umfassend:
- eine Heizeinrichtung (30); und
- eine Steuereinheit (50) nach einem der Ansprüche 6 bis 11, wobei die Steuereinheit kommunikativ, mit einem Aktuator, der eine
Heizeinrichtung (30) ist, verbunden ist und vor einer Heizphase der Heizeinrichtung (30) die elektrische Verbindung unterbricht.

13. Fahrzeug, umfassend ein System nach Anspruch 12.

## Claims

1. Method for transmitting control commands to at least one actuator (20) in a vehicle, comprising the steps of:
a) monitoring a communication bus (40);
b) detecting an event;
c) dividing the electrical connection of the communication bus into a first bus segment (42A) based on the detection of the event and a second bus segment (42B), wherein the actuator (20) is part of the second bus segment (42B);
d) transmitting the control commands to the at least one actuator (20) on the second bus segment (42B),
wherein, after the electrical connection of the communication bus (40) has been divided,
in a forwarding phase, the transmission is performed in such a way that the control commands are received on the first bus segment (42A) and output on the second bus segment (42B); and/or
in an absorption phase, at least one control command directed to the actuator (20) is received and acknowledged on the first bus segment (42A) but is not output on the second bus segment (42B).

2. Method according to claim 1, wherein
a step of connecting the first and second bus segments (42A, 42B) is preceded by a step of monitoring the communication bus (40) to detect an event, wherein a time to connect is determined based on the detection of the event.

3. Method according to any one of the preceding claims, wherein
the step of connecting is preferably immediately preceded by a forwarding phase, wherein in the forwarding phase control commands are received on the first bus segment (42A) and output on the second bus segment (42B).

4. Computer-readable memory comprising instructions for execution on at least one control unit (50) according to any one of claims 6 to 11, wherein the instructions implement the method according to any one of the preceding claims when executed on the at least one processing unit.

5. Control unit comprising at least one computer-readable memory and at least one processing unit, wherein instructions on the computer-readable memory implement the method according to any one of claims 1 to 3 when executed on the at least one processing unit.

6. Control unit comprising:
- a first transceiver (51A) for connection to a first bus segment (42A) of a vehicle;
- a second transceiver (51B) for connection to a second bus segment (42B) of the vehicle, wherein an actuator (20) is part of the second bus segment (42B);
- a processing unit (55) communicatively connected to the first and second transceivers (51B),
wherein
the processing unit (55) is adapted to monitor a communication on the first and/or second bus segment (42A, 42B) and to activate a switching device based on the monitoring, wherein the switching device is adapted to establish an electrical connection between the first bus segment (42A) and the second bus segment (42B) or to interrupt the electrical connection,
wherein
the processing unit (55) is designed
in a forwarding phase to receive at least one control command, signals by means of the first transceiver (51A) after an interruption of the electrical connection, and outputting corresponding signals by means of the second transceiver (51B) and/or,
in an absorption phase, receiving and acknowledging the at least one control command directed to the actuator (20) by means of the first transceiver (51A) and not outputting it by means of the second transceiver (51B).

7. Control unit according to claim 6,
wherein the switching device is adapted to establish the electrical connection between the first bus segment (42A) and the second bus segment (42B) in an unpowered state.

8. Control unit according to claim 6 or 7,
wherein the processing unit (55) is adapted to receive control commands by means of the first transceiver (51A) in the forwarding phase and to output corresponding control commands by means of the second transceiver (51B).

9. Control unit according to any one of claims 6 to 8,
wherein the control unit comprises at least a first termination means, in particular a first terminating resistor (56A), the control unit being adapted to terminate the first bus segment (42A) by means of the first termination means (56A) at the same time as the interruption of the electrical connection.

10. Control unit according to any one of claims 7 to 10,
wherein the control unit comprises at least a second termination means, particularly a second terminating resistor (56B), the control unit being adapted to terminate the second bus segment (42B) by means of the second termination means (56B) at the same time as the interruption of the electrical connection.

11. A control unit according to any one of claims 6 to 10,
comprising:
a first switch for terminating the first bus segment (42A) and/or
a second switch for terminating the second bus segment (42A),
wherein the processing unit actuates the first and second switches, respectively, to terminate the first and second bus segments, respectively, in the event of interruption of the electrical connection.

12. System, comprising:
- a heating device (30); and
- a control unit (50) according to any one of claims 6 to 11,
wherein the control unit is communicatively connected to an actuator, which is a heating device (30), and interrupts the electrical connection before a heating phase of the heating device (30).

13. Vehicle, comprising a system according to claim 12.

## Revendications

1. Procédé pour communiquer des instructions de commande à au moins un actionneur (20) dans un véhicule, comprenant les étapes suivantes :
a) surveillance d'un bus de communication (40) ;
b) reconnaissance d'un événement ;
c) séparation d'une connexion électrique du bus de communication dans un premier segment de bus (42A) sur la base de la reconnaissance de l'événement et un deuxième segment de bus (42B), l'actionneur (20) faisant partie du deuxième segment de bus (42B) ;
d) communication des instructions de commande à l'au moins un actionneur (20) sur le deuxième segment de bus (42B),
après la séparation de la connexion électrique du bus de communication (40),
dans une phase de retransmission, la communication s'effectuant de telle sorte que les instructions de commande sont reçues sur le premier segment de bus (42A) et sont délivrées sur le deuxième segment de bus (42B) ; et/ou
dans une phase d'absorption, au moins une instruction de commande, laquelle est adressée à l'actionneur (20), est reçue sur le premier segment de bus (42A) et confirmée, mais non délivrée sur le deuxième segment de bus (42B).

2. Procédé selon la revendication 1, une connexion du premier et du deuxième segment de bus (42A, 42B) étant précédée par une surveillance du bus de communication (40) en vue de reconnaître un événement, un instant de connexion étant déterminé en se basant sur la reconnaissance de l'événement.

3. Procédé selon l'une des revendications précédentes, une phase de retransmission précédant de préférence directement la connexion, des instructions de commande étant reçues sur le premier segment de bus (42A) et délivrées sur le deuxième segment de bus (42B) dans la phase de retransmission.

4. Mémoire lisible par ordinateur comprenant des instructions destinées à être exécutées sur au moins une unité de commande (50) selon l'une des revendications 6 à 11, les instructions mettant en œuvre le procédé selon l'une des revendications précédentes lorsque celles-ci sont exécutées sur l'au moins une unité de calcul.

5. Unité de commande, comprenant au moins une mémoire lisible par ordinateur et au moins une unité de calcul, les instructions sur la mémoire lisible par ordinateur mettant en œuvre le procédé selon l'une des revendications 1 à 3 lorsque celles-ci sont exécutées sur l'au moins une unité de calcul.

6. Unité de commande, comprenant :
- un premier émetteur-récepteur (51A) destiné à être connecté à un premier segment de bus (42A) d'un véhicule ;
- un deuxième émetteur-récepteur (51B) destiné à être connecté à un deuxième segment de bus (42B) du véhicule, un actionneur (20) faisant partie du deuxième segment de bus (42B) ;
- une unité de calcul (55), laquelle est connectée en communication au premier et au deuxième émetteur-récepteur (51B),
l'unité de calcul (55) étant configurée pour surveiller une communication sur le premier et/ou le deuxième segment de bus (42A, 42B) et activer un dispositif de commutation en se basant sur la surveillance, le dispositif de commutation étant configuré pour établir une connexion électrique entre le premier segment de bus (42A) et le deuxième segment de bus (42B) ou pour interrompre la connexion électrique,
l'unité de calcul (55) étant configurée pour, après une interruption de la connexion électrique, recevoir au moins une instruction de commande dans un signal de phase de retransmission au moyen du premier émetteur-récepteur (51A) et délivrer des signaux correspondants au moyen du deuxième émetteur-récepteur (51B) et/ou
dans une phase d'absorption, recevoir, au moyen du premier émetteur-récepteur (51A), l'au moins une instruction de commande qui est adressée à l'actionneur (20), la confirmer et ne pas la délivrer au moyen du deuxième émetteur-récepteur (51B).

7. Unité de commande selon la revendication 6, le dispositif de commutation étant configuré pour, dans un état hors tension, établir la connexion électrique entre le premier segment de bus (42A) et le deuxième segment de bus (42B).

8. Unité de commande selon la revendication 6 ou 7, l'unité de calcul (55) étant configurée pour, dans la phase de retransmission, recevoir des instructions de commande au moyen du premier émetteur-récepteur (51A) et délivrer des instructions de commande correspondantes au moyen du deuxième émetteur-récepteur (51B).

9. Unité de commande selon l'une des revendications 6 à 8, l'unité de commande comportant au moins un premier moyen de terminaison, à savoir une première résistance terminale (56A), l'unité de commande étant configurée pour réaliser la terminaison du premier segment de bus (42A) par le biais du premier moyen de terminaison (56A) simultanément avec l'interruption de la connexion électrique.

10. Unité de commande selon l'une des revendications 6 à 9, l'unité de commande comportant au moins un deuxième moyen de terminaison, à savoir une deuxième résistance terminale (56B), l'unité de commande étant configurée pour réaliser la terminaison du deuxième segment de bus (42B) par le biais du deuxième moyen de terminaison (56B) simultanément avec l'interruption de la connexion électrique.

11. Unité de commande selon l'une des revendications 6 à 10, comprenant
un premier commutateur destiné à réaliser la terminaison du premier segment de bus (42A) et/ou
un deuxième commutateur destiné à réaliser la terminaison du deuxième segment de bus (42B), l'unité de calcul actionnant le premier ou le deuxième commutateur en vue de réaliser la terminaison du premier ou du deuxième segment de bus dans le cas de l'interruption de la connexion électrique.

12. Système, comprenant :
- un dispositif de chauffage (30) ; et
- une unité de commande (50) selon l'une des revendications 6 à 11,
l'unité de commande étant connectée en communication avec un actionneur, lequel est un dispositif de chauffage (30), et interrompant la connexion électrique avant une phase de chauffe du dispositif de chauffage (30).

13. Véhicule, comprenant un système selon la revendication 12.
